# EUROPÄISCHE PATENTSCHRIFT

(11) **EP 2 840 413 B1**
(45) Veröffentlichungstag und Bekanntmachung des Hinweises auf die Patenterteilung: **07.08.2019**
(21) Anmeldenummer: 14171863.5
(22) Anmeldetag: 11.06.2014
(51) Int. Cl.: G01S 7/52, G01S 15/93

(54) **Verfahren zum Betreiben eines Ultraschallsensors**
Method for operating an ultrasonic sensor
Procédé de fonctionnement d'un capteur à ultrasons

(30) Priorität: 02.08.2013 DE 102013215215
(43) Veröffentlichungstag der Anmeldung: 25.02.2015
(73) Patentinhaber: ROBERT BOSCH GMBH, 70442 Stuttgart (DE)
(72) Erfinder: Klotz, Albrecht, 71229 Leonberg (DE); Treptow, Thomas, 71229 Leonberg (DE)

(56) Entgegenhaltungen:
- WO-A1-2013/077268
- WO-A2-2008/146208
- JP-A- 2008 232 859

## Beschreibung

### Stand der Technik

Die vorliegende Erfindung betrifft ein Verfahren zum Betreiben eines Ultraschallsensors.

Fahrassistenzfunktionen basierend auf Ultraschallsensoren sind aus dem Stand der Technik umfassend bekannt. In neuen Fahrzeuggenerationen finden zunehmend Start-Stop-Systeme Einzug. Start-Stop-Systeme sind typischerweise auch dann aktiv, wenn Park- und Manövrierfunktionen aktiv sind. Gleichzeitig stellen die Start-Stop-Systeme erhöhte Anforderungen an den Betriebsspannungsbereich der Park- und Manövriersysteme. Kurzfristige Einbrüche der Betriebsspannung auf unter 7V dürfen zu keinem Ausfall der Park- und Manövrierfunktionen führen. Funktionseinschränkungen sollen minimiert werden.

Auf dem Markt befindliche Park- und Manövrierfunktionen zeigen in der Regel stärkere Funktionseinschränkungen unterhalb einer typischen Betriebsspannung von 9V. Unter 9V degradiert die Systemperformance mehr oder minder unkontrolliert. Dies betrifft zum Beispiel den Schalldruck und damit die Reichweite der Sensoren.

Das Dokument WO 2013/077268 A1 beschreibt eine Fahrzeugvorrichtung zur Erfassung von Hindernissen. Dabei kann die Vorrichtung die Reichweite relativ zum Hindernis so weit erhöhen, dass das Hindernis erfasst wird, auch wenn die Spannungsversorgung einbricht. Dabei umfasst ein Steuergerät eine Spannungsüberwachungseinheit, die die Batteriespannung detektiert. Die Steuereinheit reduziert dabei einen Schwellenwert der Batteriespannung, wenn die Spannungsüberwachungseinrichtung eine niedrige Spannung erfasst.

Das Dokument WO 2008/146208 A2 beschreibt einen drahtlosen Ultraschallsensor mit Energiekonservierung. Die drahtlose Ultraschallsonde umfasst einen Transducer Array, einen Transceiver, einen Leistungsschaltkreis und eine wieder aufladbare Batterie. Zeigt der Batterieschaltkreis geringe Batterieleistung, so schaltet die Sonde automatisch in einen geringeren Leistungsmodus.

### Offenbarung der Erfindung

Das erfindungsgemäße Verfahren zum Betreiben eines Ultraschallsensors umfasst die Schritte des Erfassens einer an dem Ultraschallsensor anliegenden Betriebsspannung und der Anpassung einer Sendeleistung des Ultraschallsensors in Abhängigkeit von der erfassten anliegenden Betriebsspannung.

Die erfindungsgemäße Vorrichtung zum Betreiben eines Ultraschallsensors, umfasst eine Messeinheit zum Erfassen einer an dem Ultraschallsensor anliegenden Betriebsspannung und eine Anpassungseinheit zum Anpassen einer Sendeleistung des Ultraschallsensors in Abhängigkeit von der erfassten anliegenden Betriebsspannung.

Durch das erfindungsgemäße Verfahren bzw. die erfindungsgemäße Vorrichtung bleibt die Sensordetektionsleistung auch bei deutlich verringerten an dem Ultraschallsensor anliegenden Betriebsspannungen in einem kontrollierten Zustand. Das bedeutet, dass keine Fehlinterpretation eines erfassten Ultraschallechos aufgrund dessen erfolgen kann, dass die Sendeleistung während dem Aussenden eines Ultraschallsignals durch eine Veränderung der Versorgungsspannung in unbekannter Weise und somit unkontrolliert verändert wurde. Die Leistungsfähigkeit des Ultraschallsensors wird zugunsten der Zuverlässigkeit der von dem Ultraschallsensor gelieferten Sensordaten reduziert.

Durch die Erfindung kann das bei Fahrzeugherstellern als sehr kritisch eingestufte Warmstartverhalten und Unterspannungsverhalten für Park- und Manövrierfunktionen verbessert werden. Die Vorteile liegen zudem in der hohen Wirksamkeit und den geringen Kosten.

Die Unteransprüche zeigen bevorzugte Weiterbildungen der Erfindung.

Insbesondere erfolgt die Anpassung der Sendeleistung durch eine Anpassung eines Sendestroms des Ultraschallsensors. Auf diese Weise erfolgt keine Beeinflussung der Betriebsspannung. Dies ist vorteilhaft, da die Betriebsspannung somit jederzeit als ein zuverlässiger Indikator dafür genutzt werden kann, ob eine Anpassung der Sendeleistung notwendig ist. Zudem wird insbesondere eine Anpassung der Sendeleistung von Ultraschallsensoren nach dem Stand der Technik ermöglicht. Durch die Verwendung von Standardbauteilen kann ein Kostenvorteil erzielt werden.

Des Weiteren ist es vorteilhaft, dass eine Reduzierung der Sendeleistung erfolgt, wenn die erfasste Betriebsspannung unterhalb eines Schwellenwertes liegt. Dies ist vorteilhaft, da die Zuverlässigkeit eines Ultraschallsensors typischerweise erst unterhalb einer spezifischen Betriebsspannung abfällt. Oberhalb dieser Betriebsspannung kann auf eine Einschränkung der Sendeleistung verzichtet werden und der Ultraschallsensor somit mit maximal möglicher Leistungsfähigkeit bzw. maximaler Sendeleistung betrieben werden.

Ebenso vorteilhaft ist es, wenn mehrere Schwellenwerte für die Betriebsspannung festgelegt sind und die Anpassung der Sendeleistung auf eine vorgegebene Sendeleistung in Abhängigkeit davon erfolgt, welcher der Schwellenwerte unterschritten wird. Durch diese stufenweise Anpassung kann die Sendeleistung derart angepasst werden, dass ein optimales Gleichgewicht zwischen der Zuverlässigkeit der von dem Ultraschallsensor gelieferten Abstandsdaten und der Leistungsfähigkeit des Ultraschallsensors erzielt wird.

Zudem ist es von Vorteil, wenn ein die Reichweite des Ultraschallsensors repräsentierender Wert bereitgestellt wird. Ein solcher Wert kann durch ein den Ultraschallsensor umfassendes System genutzt werden, um z.B. Informationen über eine Einschränkung der Sendeleistung an einen Nutzer eines solchen Systems zu geben. Des Weiteren könnte eine Abschaltung eines solchen Systems oder eine Anpassung der Auswertungsalgorithmen für die erfassten Abstandsdaten erfolgen. So könnte insbesondere eine Verlängerung des Trackings von Objekten erfolgen.

In einer bevorzugten Ausführungsform erfolgt eine Anpassung der Sendeleistung unverzüglich auf das Erfassen der Betriebsspannung. Dies ist vorteilhaft, da durch eine schnelle Anpassung auch kurze Zeitintervalle mit unkontrollierter Sendeleistung vermieden werden.

In einer weiteren bevorzugten Ausführungsform erfolgt eine Anpassung der Sendeleistung jeweils für einen vollen Sendezyklus des Ultraschallsensors. Dies ist vorteilhaft, da somit eine sichere Abschätzung der Leistungsfähigkeit des Ultraschallsensors (wie z.B. dessen Reichweite) für diesen Sendezyklus ermöglicht wird.

In einer weiteren bevorzugten Ausführungsform erfolgt eine Anpassung der Sendeleistung mit einer vorgegeben Zeitverzögerung nach dem Erfassen der Betriebsspannung. Somit wird ein häufiger aufeinanderfolgender Wechsel der Sendeleistung vermieden. Dadurch wird unter anderem ein Vorteil in der Qualität der erfassten Sensordaten erzielt, da diese aufgrund der gleichen zugrundeliegenden Sendeleistung miteinander vergleichbar sind.

Insbesondere ist ein Ultraschallsensor mit den zuvor beschriebenen Merkmalen vorteilhaft, da die durch einen solchen Sensor erfassten Abstandsinformationen eine hohe Zuverlässigkeit aufweisen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:

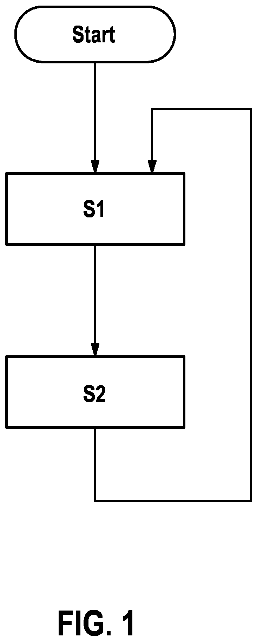

- Figur 1: ein Blockschaltbild des erfindungsgemäßen Verfahrens.

### Ausführungsformen der Erfindung

Figur 1 zeigt ein Blockschaltbild des erfindungsgemäßen Verfahrens. Das Verfahren kann zum Beispiel durch ein Startsignal angestoßen werden oder wird permanent durchgeführt, solange eine das Verfahren ausführende Einheit in Betrieb ist.

Durch das Verfahren wird der Sensorschalldruck dynamisch im laufenden Betrieb bei Unterspannungen verringert, um dadurch die Systemverfügbarkeit speziell im Unterspannungsfall z.B. bei einem Warmstart möglichst lange und möglichst definiert aufrecht zu erhalten. Das Verfahren besteht darin, dass ein Ultraschallsensor seine eigene Betriebsspannung überwacht. Sinkt die Betriebsspannung unter einem parametrierbaren Schwellenwert, wird in dem Ultraschallsensor automatisch die Sendeleistung bzw. der Sendestrom definiert verringert. Das Maß der Verringerung ergibt sich aus der erfassten Betriebsspannung. Steigt die Betriebsspannung über den Schwellenwert, so wird wieder die nicht verringerte Sendeleistung bzw. der nicht verringerte Sendestrom bereitgestellt. Somit bleibt eine Sensordetektionsleistung auch bei deutlich verringerten Betriebsspannungen bzw. Eingangsspannungen möglichst lange definiert und es resultieren kontrollierbare Funktionseinschränkungen.

In einem ersten Verfahrensschritt S1 erfolgt das Erfassen einer an dem Ultraschallsensor anliegenden Betriebsspannung. Die Betriebsspannung ist dabei die Spannung, die an dem Ultraschallsensors angelegt wird, um diesen mit der für das Aussenden eines Ultraschallsignals notwendigen Energie zu versorgen. Die Betriebsspannung kann dabei als ein analoger Wert oder ein digitaler Wert erfasst werden.

In Anschluss an die Durchführung des ersten Verfahrensschrittes S1, wird ein zweiter Verfahrensschritt S2 durchgeführt. In diesem erfolgt eine Anpassung einer Sendeleistung des Ultraschallsensors in Abhängigkeit von der erfassten anliegenden Betriebsspannung. Dazu erfolgt im zweiten Verfahrensschritt S2 beispielsweise zunächst ein Vergleich der erfassten Betriebsspannung mit einem gegebenen Schwellenwert. Dieser Schwellenwert liegt in diesem Ausführungsbeispiel bei 9V. Dieser Schwellenwert ist hier beispielhaft gewählt. Er entspricht typischerweise einem Wert einer Betriebsspannung unterhalb derer der Ultraschallsensor unzuverlässige Abstandsinformationen ausgibt. Liegt die erfasste Betriebsspannung oberhalb des Schwellenwertes, so wird die Sendeleistung des Ultraschallsensors nicht begrenzt und der zweite Verfahrensschritt ist abgeschlossen. Liegt die erfasste Betriebsspannung unterhalb des Schwellenwertes, so erfolgt eine Begrenzung der Sendeleistung des Ultraschallsensors. Steigt die Betriebsspannung über den Schwellenwert, so erlischt diese Unterspannungsbedingung und in dem Ultraschallsensor wird wieder die volle Sendeleistung bzw. der volle Sendestrom zugelassen. Dies erfolgt insbesondere durch ein Einstellen der Sendeleistung bzw. des Sendestroms durch eine Sendestufe.

Es ist vorteilhaft unmittelbar, d.h. auch innerhalb eines begonnenen Sendepulses, die volle Sendeleistung bzw. den vollen Sendestrom zuzulassen, wenn die Unterspannungsbedingung nicht mehr erfüllt ist. Optional ist es vorteilhaft die volle Sendeleistung bzw. den vollen Sendestrom erst in einem folgenden Sendepuls wieder zuzulassen. Optional ist es ebenso vorteilhaft die volle Sendeleistung bzw. den vollen Sendestrom nach einem vorgegebenen Zeitintervall wieder zuzulassen.

Ein Grad der Begrenzung der Sendeleistung kann durch einen Vergleich der erfassten Betriebsspannung mit vorgegebenen Spannungsbereichen erfolgen. Diese Spannungsbereiche können durch mehrere Schwellenwerte festgelegt sein. Die Anpassung der Sendeleistung auf eine vorgegebene Sendeleistung erfolgt in Abhängigkeit davon, welcher der Schwellenwerte unterschritten wird. Im Beispiel könnte ab einer Betriebsspannung kleiner als 9V eine Beschränkung der Sendeleistung auf 50% erfolgen. Unterschreitet die Betriebsspannung 8V erfolgt eine Beschränkung der Sendeleistung auf 25%. Unterschreitet die Betriebsspannung 7V erfolgt eine Beschränkung der Sendeleistung auf 10%. Unterschreitet die Betriebsspannung 6V erfolgt eine Beschränkung der Sendeleistung auf 0%.

Eine Anpassung der Sendeleistung kann beispielsweise durch eine Begrenzung eines Sendestroms des Ultraschallsensors geschehen. Der Sendestrom ist dabei der Strom, der zur Erzeugung eines Ultraschallsignales genutzt wird. Dabei kann es sich entweder um einen Gleichstrom oder einen Wechselstrom handeln, der einer Elektronik zur Erzeugung des Ultraschallsignales zugeführt wird oder von dieser im Laufe der Erzeugung des Ultraschallsignales erzeugt wird.

Eine solche Anpassung kann unverzüglich erfolgen. Das bedeutet, dass eine Anpassung der Sendeleistung während dem Aussenden eines Ultraschallsignales erfolgen kann.

Eine Anpassung der Sendeleistung kann ebenso für jeweils einen Sendezyklus erfolgen. Dazu ist es vorteilhaft, die beiden Verfahrensschritte S1 und S2 unmittelbar vor einer Sendephase durchzuführen, und erst nach dieser Sendephase erneut auszuführen.

Eine Anpassung der Sendeleistung kann ebenso mit einer zeitlichen Verzögerung erfolgen. Dabei ist es vorteilhaft, wenn das Erfassen der Betriebsspannung innerhalb dieser zeitlichen Verzögerung erneut durchgeführt wird. Erst bei einer mehrfachen Erfassung ähnlicher Werte für eine Betriebsspannung erfolgt eine Anpassung der Sendeleistung.

Nach Abschluss der zweiten Verfahrensschrittes S2 verzweigt das Verfahren zurück in den ersten Verfahrensschritt S1.

In einer vorteilhaften Ausführungsform des Verfahrens, die jedoch mit allen anderen möglichen Ausführungsformen kombinierbar ist, umfasst das Verfahren einen dritten Verfahrensschritt, in dem ein die Reichweite des Ultraschallsensors repräsentierender Wert bereitgestellt wird. Insbesondere wird ein solcher Wert bei der Herstellung des Ultraschallsensors bevorzugt auf den Schalldruck eines jeden Ultraschallsensors individuell abgeglichen. Erfolgt eine Anpassung der Sendeleistung, so wird der Grad der Anpassung an ein Steuergerät übermittelt und durch dieses ein individueller Wert für den Schalldruck des Ultraschallsensors ausgegeben. Dieser Wert kann in einem Systemverbund ausgewertet werden und somit abgeschätzt werden, inwieweit ein Reichweitenverlust eintritt und wie eine angemessene Reaktion auf Systemebene aussehen soll. So könnte zum Beispiel eine Information an einen Fahrer ausgegeben, das Tracking von Objekten verlängert, Systemparameter angepasst oder das System teilweise oder ganz abgeschaltet werden.

## Patentansprüche

1. Verfahren zum Betreiben eines Ultraschallsensors, umfassend die Schritte
- Erfassen einer an dem Ultraschallsensor anliegenden Betriebsspannung (S1), und
- Anpassung einer Sendeleistung des Ultraschallsensors in Abhängigkeit von der erfassten anliegenden Betriebsspannung (S2),
**dadurch gekennzeichnet, dass** eine Reduzierung der Sendeleistung erfolgt, wenn die erfasste Betriebsspannung unterhalb eines Schwellenwertes liegt, wobei ein Grad einer Anpassung der Sendeleistung an ein Steuergerät übermittelt wird und in Abhängigkeit der Anpassung ein individueller Wert für den Schalldruck des Ultraschallsensors ausgegeben wird, wobei in Abhängigkeit des individuellen Werts für den Schalldruck ein Reichweitenverlust abgeschätzt wird, sodass ein die Reichweite des Ultraschallsensors repräsentierender Wert bereitgestellt wird und in Abhängigkeit der Reichweite des Ultraschallsensors eine Information an den Fahrer ausgegeben wird.

2. Verfahren nach Anspruch 1, **dadurch gekennzeichnet, dass** die Anpassung der Sendeleistung durch eine Anpassung eines Sendestroms des Ultraschallsensors erfolgt.

3. Verfahren nach einem der vorgehenden Ansprüche, **dadurch gekennzeichnet, dass** mehrere Schwellenwerte für die Betriebsspannung festgelegt sind und die Anpassung der Sendeleistung auf eine vorgegebene Sendeleistung in Abhängigkeit davon erfolgt, welcher der Schwellenwerte unterschritten wird.

4. Verfahren nach einem der vorgehenden Ansprüche, **dadurch gekennzeichnet, dass** eine Anpassung der Sendeleistung unverzüglich auf das Erfassen der Betriebsspannung erfolgt.

5. Verfahren nach einem der vorgehenden Ansprüche 1 bis 3, **dadurch gekennzeichnet, dass** eine Anpassung der Sendeleistung jeweils für einen vollen Sendezyklus des Ultraschallsensors erfolgt.

6. Verfahren nach einem der vorgehenden Ansprüche 1 bis 3, **dadurch gekennzeichnet, dass** eine Anpassung der Sendeleistung mit einer vorgegeben Zeitverzögerung nach dem Erfassen der Betriebsspannung erfolgt.

## Claims

1. Method for operating an ultrasound sensor, comprising the steps of
- detecting an operating voltage (S1) applied to the ultrasound sensor, and
- adjusting a transmission power of the ultrasound sensor depending on the detected applied operating voltage (S2), **characterized in that** the transmission power is reduced when the detected operating voltage is below a threshold value, wherein a degree of adjustment of the transmission power is transmitted to a control device and an individual value for the sound pressure of the ultrasound sensor is output depending on the adjustment, wherein a loss of range is estimated depending on the individual value for the sound pressure so that a value representing the range of the ultrasound sensor is provided and a piece of information is output to the driver depending on the range of the ultrasound sensor.

2. Method according to Claim 1, **characterized in that** the transmission power is adjusted by adjusting a transmission current of the ultrasound sensor.

3. Method according to either of the preceding claims, **characterized in that** a plurality of threshold values for the operating voltage are set and the transmission power is adjusted to a prescribed transmission power depending on which of the threshold values is undershot.

4. Method according to one of the preceding claims, **characterized in that** the transmission power is adjusted immediately upon the detection of the operating voltage.

5. Method according to one of the preceding Claims 1 to 3, **characterized in that** the transmission power is adjusted in each case for a full transmission cycle of the ultrasound sensor.

6. Method according to one of the preceding Claims 1 to 3, **characterized in that** the transmission power is adjusted with a prescribed time delay after the detection of the operating voltage.

## Revendications

1. Procédé pour faire fonctionner un capteur à ultrasons, comprenant les étapes de
- détection d'une tension de service (S1) appliquée au capteur à ultrasons, et
- adaptation d'une puissance d'émission du capteur à ultrasons en fonction de la tension de service appliquée détectée (S2),
**caractérisé en ce qu'**une réduction de la puissance d'émission a lieu lorsque la tension de service détectée est inférieure à une valeur de seuil, un degré d'une adaptation de la puissance d'émission étant communiqué à un contrôleur et une valeur individuelle pour la pression acoustique du capteur à ultrasons étant délivrée en fonction de l'adaptation, une perte de portée étant estimée en fonction de la valeur individuelle pour la pression acoustique, de sorte qu'une valeur qui représente la portée du capteur à ultrasons est mise à disposition et une information est délivrée au conducteur en fonction de la portée du capteur à ultrasons.

2. Procédé selon la revendication 1, **caractérisé en ce que** l'adaptation de la puissance d'émission est effectuée par une adaptation d'un courant d'émission du capteur à ultrasons.

3. Procédé selon l'une des revendications précédentes, **caractérisé en ce que** plusieurs valeurs de seuil sont fixées pour la tension de service et l'adaptation de la puissance d'émission à une puissance d'émission prédéfinie est effectuée en fonction de celle parmi les valeurs de seuil qui est franchie vers le bas.

4. Procédé selon l'une des revendications précédentes, **caractérisé en ce qu'**une adaptation de la puissance d'émission est effectuée immédiatement à la détection de la tension de service.

5. Procédé selon l'une des revendications précédentes 1 à 3, **caractérisé en ce qu'**une adaptation de la puissance d'émission est effectuée respectivement pour un cycle d'émission complet du capteur à ultrasons.

6. Procédé selon l'une des revendications précédentes 1 à 3, **caractérisé en ce qu'**une adaptation de la puissance d'émission est effectuée avec un retard prédéfini après la détection de la tension de service.
